# EUROPEAN PATENT APPLICATION

(11) **EP 1 845 758 A2**
(43) Date of publication of application: **17.10.2007**
(21) Application number: 07007380.4
(22) Date of filing: 11.04.2007
(51) Int. Cl.: H05H 1/36

(54) **Plasma torch**

(30) Priority: 11.04.2006 JP 2006108509
(71) Applicant: KOIKE SANSO KOGYO CO., LTD, Edogawa-ku, Tokyo (JP)
(72) Inventor: Koike, Tetsuo, c/o Koike Sanso Kogyo Co., Ltd., Tokyo (JP); Furujo, Akira, c/o Koike Sanso Kogyo Co., Ltd., Tokyo (JP)
(74) Representative: Göhring, Robert

(57) **Abstract**

In a plasma torch A, a valve 10 is provided to a gas supply path 8 for supplying a plasma gas inside or in a vicinity of the plasma torch A, a closing operation of the valve 10 is approximately synchronized with a change in the electric current at the time of stopping a plasma arc. The valve 10 is provided on a position separated from the front end 4b of the plasma torch by within a range of a distance of 600 mm.

## Description

### BACKGROUND OF THE INVENTION

### 1. Field of the Invention

The present invention relates to a plasma torch in which a position of a valve on a plasma gas supply path is set so that the consumption of plasma gas can be reduced as much as possible.

### 2. Description of the Related Art

Plasma torches supply plasma gas to a space formed by an electrode and a nozzle, and carry out discharging between the electrode and the nozzle so as to obtain a plasma arc. The plasma torches jet the plasma arc from the nozzle to a material to be cut, so as to melt and eliminate a base material, and move the material to be cut relatively along a scheduled cutting path so as to cut the material.

The above plasma torches are mainly installed in NC cutting devices which are numerically controlled so as to be used. In this case, generally the plasma torch is mounted to a traverse carriage provided to a cross girder of the NC cutting device, and a solenoid valve which controls the supply of plasma gas to the plasma torch is fixed to a frame or the traverse carriage. Further, the plasma torch and the solenoid valve are connected by a hose. Such an NC cutting device has a space having a volume of the hose, a volume of a plasma gas passage in the plasma torch and a volume obtained by adding these volumes in the lower stream side of the solenoid valve.

On the other hand, plasma cutting is carried out appropriately when a predetermined correlation between a plasma gas flow rate and an arc current value is established. When the plasma gas flow rate and the arc current value are off-balanced, the arc discharge is stopped or a series arc is generated so that an electrode is damaged. In order to cope with this problem, the plasma gas flow rate is changed in synchronization with a change in the arc current value (for example, see Japanese Patent No. 3231899).

In the plasma torches, in order to reduce a consumption of the electrode as much as possible, when the cutting is ended, electrical connection with the electrode is cut off. Thereafter, a flow of the plasma gas called as after flow is maintained around the electrode for a predetermined time, and the supply of the plasma gas is stopped.

As a distance between the plasma torch and the solenoid valve becomes longer, a volume of the plasma gas flow passage formed between the solenoid valve and a front end of the plasma torch becomes larger. For this reason, when the solenoid valve is closed, the time required when the plasma gas which remains in the plasma gas flow passage is discharged from the front end of the plasma torch into the air increases. Even after the cutting is ended and the plasma arc is stopped, the discharge of the plasma gas continues.

That is to say, after the solenoid valve is closed, even if the constant amount of the plasma gas realizes the after flow, the most of the other plasma gas flows out into the air, thereby causing economic waste.

As the volume of the plasma gas flow passage formed between the solenoid valve and the front end of the plasma torch becomes larger, it takes a longer time to drop the pressure in the plasma gas flow passage on a lower stream side of the solenoid valve at the time of closing the solenoid valve. The amount of the plasma gas supplied to the vicinity of the electrode increases, and thus the electrode is possibly damaged.

### SUMMARY OF THE INVENTION

It is an obj ect of the present invention to provide a plasma torch in which a position of a valve for controlling supply of a plasma gas provided in a plasma gas supply path is set so that consumption of the plasma gas can be reduced as much as possible.

In order to achieve the above object, a plasma torch of the present invention converts a supplied plasma gas into plasma and jets the plasma from a front end of the plasma torch to a material to be cut so as to cut the material. A valve that controls the supply of the plasma gas is provided onto a plasma gas supply path inside or in a vicinity of the plasma torch. A closing operation of the valve is approximately synchronized with a change in an electric current at the time of stopping a plasma arc.

In the above plasma torch, the valve is desirably selected from any one of a solenoid valve, a motor valve, an electropneumatic regulator and a constant flow element. It is more desirable that the valve is provided to a position within a range of 600 mm separated from a front end of the plasma torch.

In the plasma torch of the present invention, the valve for controlling the supply of the plasma gas is provided to the plasma gas supply path inside or in the vicinity of the plasma torch. The closing operation of the valve is approximately synchronized with the change in an electric current at the time of stopping the plasma arc. As a result, after flow according to the change in the electric current can be realized, and useless consumption of the plasma gas can be reduced.

The valve is selected from any one of a solenoid valve, a motor valve, an electropneumatic regulator and a constant flow element. As a result, the supply of the plasma gas can be controlled according to the change in the electric current at the time of stopping the plasma arc.

When the valve is closed, the after flow can be realized by a flow accompanied by the pressure drop of the plasma gas filling the volume of the plasma gas supply path formed between the valve and the front end of the plasma gas. When the valve is provided in a position within a range of 600 mm from the front end of the plasma torch, a necessary amount for the after flow can be obtained. As a result, the after flow of the plasma gas approximately synchronized with the change in the electric current at the time of stopping the plasma arc can be realized. For this reason, the useless consumption of the plasma gas can be reduced.

### BRIEF DESCRIPTION OF DRAWINGS

FIG. 1 is a diagram schematically illustrating a constitution of a plasma torch;

FIG. 2 is a diagram illustrating a piping volume according to a distance from a torch front end to a solenoid valve;

FIG. 3 is a diagram illustrating a relationship between closing of the solenoid valve and a pressure drop according to the distance from the torch front end to the solenoid valve; and

FIG. 4 is a diagram illustrating a relationship between the distance from the torch front end to the solenoid valve and endurance time of an electrode.

### DESCRIPTION OF THE PREFERRED EMBODIMENT

A plasma torch according to the most preferable embodiment of the present invention is described below. In the plasma torch of the present invention, a position of a valve in a plasma gas supply path is set so that an amount of a plasma gas consumed uselessly is reduced as much as possible. The valve is closed simultaneously with cutting-off of electric connection to the plasma torch, so that a suitable plasma gas is supplied to a vicinity of an electrode and after flow is carried out.

The plasma torch of the present invention uses oxygen gas as the plasma gas, and converts the oxygen gas into plasma so as to jet the plasma to a material to be cut such as a steel plate or a stainless steel plate. As a result, the plasma torch melts and oxidizes the material to be cut and eliminates a molten material and a molten oxide from a base material. With this state being maintained, the plasma torch and the material to be cut are moved relatively so that the material can be cut.

With such a plasma torch, when an arc current which is applied to the plasma torch is entirely cut off in the case where a plasma arc is stopped, a non-load voltage is applied to the electrode. As a result, the electrode in a high-temperature state is further consumed. The applicant of the present invention has devised the invention for solving this problem and has got a patent as Japanese Patent No. 3468864.

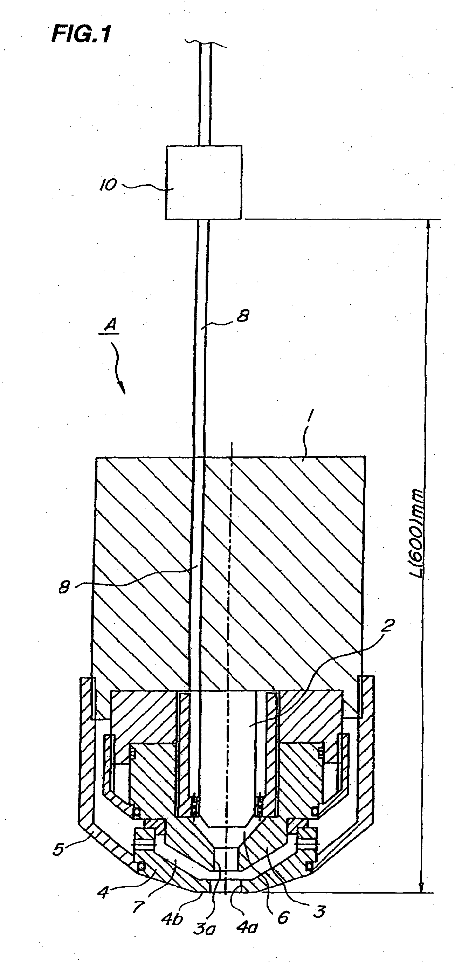

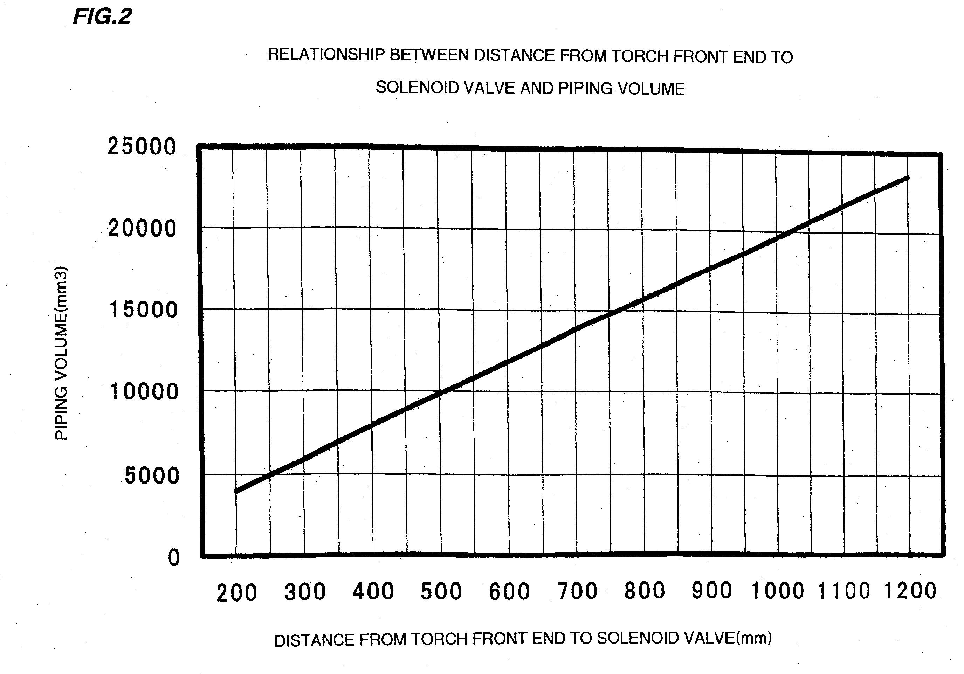

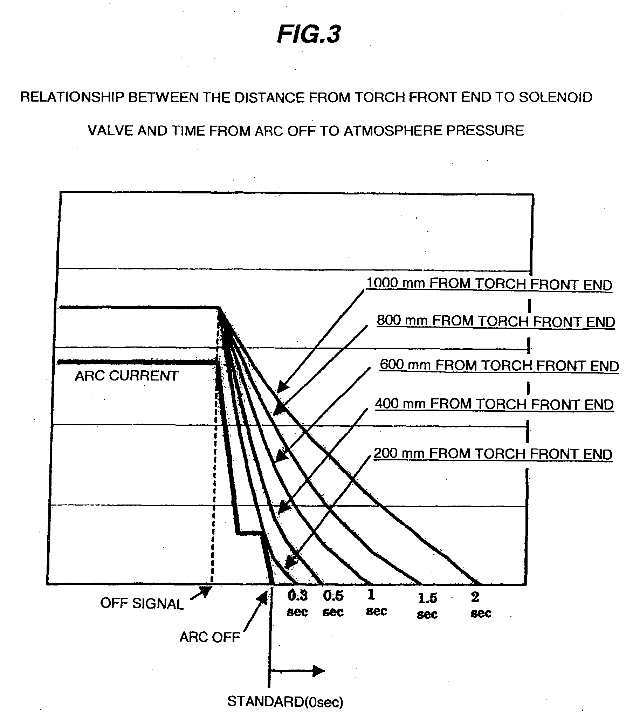

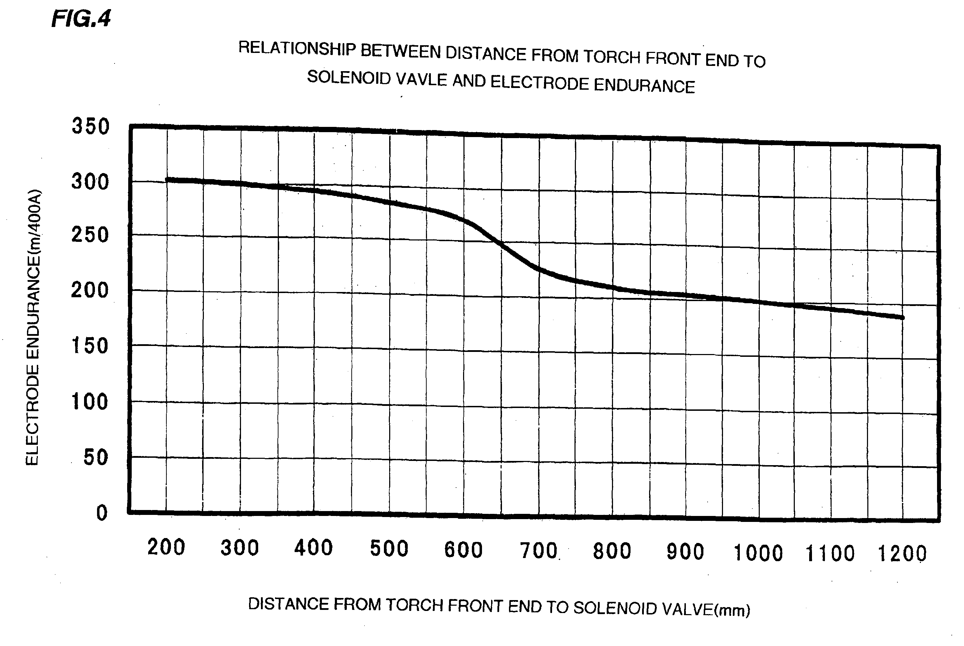

A constitution of the plasma torch according to this embodiment is explained below with reference to the drawings. FIG. 1 is a diagram schematically illustrating the constitution of the plasma torch. FIG. 2 is a diagram illustrating a piping volume according to a distance from a torch front end to a solenoid valve. FIG. 3 is a diagram illustrating a relationship between closing of the solenoid valve and a pressure drop according to the distance from the torch front end to the solenoid valve. FIG. 4 is a diagram illustrating a relationship between the distance from the torch front end to the solenoid valve and endurance time of the electrode.

In the plasma torch A shown in FIG. 1, the electrode 2 is detachably mounted to the front end of a torch main body 1, and a nozzle 3 is arranged so as to be opposed to the electrode 2. A secondary nozzle 4 is detachably mounted to the torch main body 1 via a cap 5 on an outer periphery of the nozzle 3. A chamber 6 is formed by the electrode 2 and the nozzle 3, and a plasma gas supplied to the chamber 6 is converted into plasma so that the plasma is jetted from a hole 3a of the nozzle 3. A secondary airflow passage 7 is formed between the nozzle 3 and the secondary nozzle 5, and a secondary airflow is formed along a plasma arc to be jetted from the hole 3a of the nozzle 3 so as to be capable of being jetted from a hole 4a of the secondary nozzle 4.

A gas supply path 8 for supplying the plasma gas to the chamber 6 is provided to an upper end of the torch main body 1. A cooling water connecting section (not shown) for supplying and discharging cooling water for cooling the electrode 2 and the nozzle 3 is provided. A cable (not shown) for electrically connecting to the electrode 2 and a cable (not shown) for electrically connecting to the nozzle 3 can be connected.

A valve 10 which controls the supply of the plasma gas is arranged on a predetermined position of the gas supply path 8. The gas supply path 8 may be constituted so that a distance from a front end 4b of the plasma torch to the valve 10 is maintained so as to have a preset length. The gas supply path 8 does not have to be necessarily made of a metal pipe. A piping diameter of the gas supply path 8 is preset, and piping having inner diameter of 5 mm is used in this embodiment.

The constitution of the valve 10 provided to the gas supply path 8 formed in the torch main body 1 of the plasma torch A is not particularly limited, and the valve 10 may have a function for controlling the supply of the plasma gas via the gas supply path 8. Examples of such a valve 10 include a solenoid valve, a motor valve, an electropneumatic regulator, and a constant flow element (for example, mass flow (registered trademark)), and one of them can be selected to be used.

The valve 10 is provided to a position which is separated by L mm from a front end surface 4b of the secondary nozzle 4 mounted to a front end of the plasma torch A, namely, the front end of the torch main body 1 (hereinafter, the front end 4b of the plasma torch). For this reason, the piping volume of the gas supply path 8 from the front end 4b of the plasma torch to the valve 10 changes according to the change in the distance from the front end 4b of the plasma torch to the valve 10 as shown in FIG. 2.

The distance from the front end 4b of the plasma torch to the valve 10 is changed and the valve 10 is closed in a state that the plasma gas is supplied to the gas supply path 8 with a pressure of 0.49 MPa. At this time, the pressure drop in the gas supplypath 8 on a lower stream side of the valve 10 is measured. As a result, as shown in FIG. 3, understandably, as the distance from the front end 4b of the plasma torch to the valve 10 becomes longer, a degree of the pressure drop becomes gentler.

This means that as the distance from the front end 4b of the plasma torch to the valve 10 becomes longer, an oxidizing atmosphere due to the plasma gas in the chamber 6 formed by the electrode 2 and the nozzle 3 further continues.

"The arc current" in FIG. 3 carries out the invention described in Japanese Patent No. 3468864. When a plasma arc is cut off, an arc current which is lower than an arc current at the time of cutting is applied for predetermined time (a flat portion in a low position shown in the drawing) before cutting off the arc current. Before a non-load voltage is applied to the electrode, cooling of the electrode is promoted so that the surface of the electrode is coagulated. That is to say, the electric current is controlled in the following manner. At the time of stopping the plasma arc, the plasma current is temporarily dropped to an electric current lower than an operating current (an electric current which can drop the temperature of the electrode so that the electrode is hardened). That electric current is supplied for predetermined time, and then is cut off.

As is clear from FIG. 3, the pressure of the plasma gas in the chamber 6 while the arc current value at the time of cutting shifts to a smaller arc current value becomes higher as the distance from the front end 4b of the plasma torch to the valve 10 becomes longer. That is to say, the oxidizing atmosphere in the chamber 6 is maintained.

The valve 10 is closed simultaneously with the change in the arc current into the arc current lower than the arc current at the time of cutting, and the lower electric current is connected for predetermined time. The endurance (endurance time) of the electrode 2 is measured when the distance from the front end 4b of the plasma torch to the valve 10 is changed. As shown in FIG. 4, as the distance from the front end 4b of the plasma torch to the valve 10 becomes longer, the endurance time becomes shorter, but the endurance time greatly changes while the distance L shifts from 600 mm to 700 mm.

This is because as the distance from the front end 4b of the plasma torch to the valve 10 becomes longer, the pressure of the plasma gas in the chamber 6 is higher, and thus the oxidizing atmosphere is maintained.

When the results in FIGS. 3 and 4 are considered as described above, it is desirable that the distance L from the front end 4b of the plasma torch to the valve 10 is smaller than 600 mm in order to elongate the life of the electrode 2. When the distance L exceeds 600 mm, the life of the electrode 2 becomes short, and the plasma gas supplied to the chamber 6 does not contribute to the elongation of the life of the electrode 2. That is to say, the plasma gas supplied to the chamber 6 is consumed uselessly.

Therefore, the valve 10 is arranged in the position separated from the front end 4b of the plasma torch by within the distance of 600 mm. The valve 10 is closed in synchronization with changing of the arc current at the time of cutting into a lower arc current so that the closing is allowed to be synchronized with the change in the electric current at the time of stopping the plasma arc. As a result, the change in the arc current can be approximately synchronized with a change at the time when a residual gas in the gas supply path 8 on the lower stream side of the valve 10 drops to an atmosphere pressure. The useless consumption of the plasma gas can be reduced without shortening the life of the electrode 2.

In the plasma torch A having the above constitution, the arc current at the end of the cutting is controlled and simultaneously the valve 10 is closed. The pressure drop of the plasma gas remaining in the plasma gas supply path can be approximately synchronized with the drop of the arc current. For this reason, the useless consumption of the plasma gas can be reduced as much as possible, thereby producing advantageous effect.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A plasma torch that converts a supplied plasma gas into plasma and jets the plasma from a front end of the plasma torch to a material to be cut so as to cut the material, the plasma torch comprising:
a valve on a plasma gas supply path inside or in a vicinity of the plasma torch, **characterized in that**
the valve is approximately synchronized with a change in an electric current at the time of stopping a plasma arc so as to be closed.

2. The plasma torch according to claim 1, **characterized in that**
the valve is selected from any one of a solenoid valve, a motor valve, an electropneumatic regulator and a constant flow element.

3. The plasma torch according to claim 1, **characterized in that**
the valve is provided onto the supply path within a range of 600 mm from a front end of the plasma torch.

4. The plasma torch according to claim 1, **characterized in that**
electric current of the plasma torch is controlled so that at the time of stopping the plasma arc, the plasma current is temporarily dropped to an electric current lower than an operating current and the electric current is supplied for predetermined time, and then is cut off.
